# EUROPÄISCHE PATENTSCHRIFT

(11) **EP 1 451 887 B1**
(45) Veröffentlichungstag und Bekanntmachung des Hinweises auf die Patenterteilung: **24.06.2015**
(21) Anmeldenummer: 02785374.6
(22) Anmeldetag: 07.11.2002
(51) Int. Cl.: H01M 8/10, C08J 5/22

(54) **PROTONENLEITENDE ELEKTROLYTMEMBRAN, VERFAHREN ZU IHRER HERSTELLUNG UND DEREN VERWENDUNG IN EINER BRENNSTOFFZELLE**
PROTON-CONDUCTING ELECTROLYTE MEMBRANE, METHOD FOR PRODUCTION AND USE THEREOF IN A FUEL CELL
MEMBRANE ELECTROLYTIQUE DE CONDUCTION PROTONIQUE, SON PROCEDE DE PRODUCTION ET SON UTILISATION DANS UNE PILE A COMBUSTIBLE

(30) Priorität: 12.11.2001 DE 10155543; 12.11.2001 DE 10155545
(43) Veröffentlichungstag der Anmeldung: 01.09.2004
(73) Patentinhaber: Volkswagen Aktiengesellschaft, 38440 Wolfsburg (DE)
(72) Erfinder: MELZNER, Dieter, 37075 Göttingen (DE); KIEL, Suzana, 37073 Göttingen (DE); MÄHR, Ulrich, 14052 Berlin (DE); REICHE, Annette, 37079 Göttingen (DE)
(86) Internationale Anmeldenummer: PCT/EP2002/012461
(87) Internationale Veröffentlichungsnummer: WO 2003/043116

(56) Entgegenhaltungen:
- US-A- 5 525 436
- US-A- 5 945 233
- SCHECHTER A ET AL: "Imidazole and 1-methyl imidazole in phosphoric acid doped polybenzimidazole, electrolyte for fuel cells" SOLID STATE IONICS, NORTH HOLLAND PUB. COMPANY. AMSTERDAM, NL, Bd. 147, Nr. 1-2, 1. März 2002 (2002-03-01), Seiten 181-187, XP004342325 ISSN: 0167-2738
- ZUKOWSKA G ET AL: "Nonaqueous gel electrolytes doped with phosphoric acid esters" SOLID STATE IONICS, NORTH HOLLAND PUB. COMPANY. AMSTERDAM, NL, Bd. 144, Nr. 1-2, 1. September 2001 (2001-09-01), Seiten 163-173, XP004305620 ISSN: 0167-2738
- WAINWRIGHT ET AL: "Acid-doped polybenzimidazoles, a new polymer electrolyte" PROCEEDINGS OF THE SYMPOSIUM ON ELECTRODE MATERIALS AND PROCESSES FOR ENERGY CONVERSION AND STORAGE, XX, XX, Bd. 94, Nr. 23, 22. Mai 1994 (1994-05-22), Seiten 255-264, XP002096976

## Beschreibung

Die vorliegende Erfindung betrifft eine protonenleitende Elektrolytmembran. Insbesondere betrifft die vorliegende Erfindung eine protonerlleitende Elektrolytmembran mit hoher Leitfähigkeit, hoher mechanischer und chemischer Stabilität, hoher Flexibilität und thermischer Beständigkeit, die in Brennstoffzellen in einem weiten Temperaturbereich eingesetzt werden kann. Ferner betrifft die vorliegende Erfindung ein Verfahren zur Herstellung der protonenleitenden Elektrolytmembran sowie die Verwendung mindestens einer protonenleitenden Elektrolytmembran in Form einer Membran-Elektroden-Einheit (MEA) in einer Brennstoffzelle.

Zur stationären und mobilen Stromgewinnung, z.B. für Straßenfahrzeuge, in der Raumfahrt, in Kraftwerken etc. werden in zunehmenden Maße Brennstoffzellen als mögliche Stromquelle untersucht und entwickelt. Eine Brennstoffzelle ist ein galvanisches Element, in dem chemische Energie direkt, d.h. nicht auf dem Umweg über thermische Energie, in elektrische Energie umgewandelt wird. Die Einzelzelle besteht dabei aus zwei invarianten Elektroden, zwischen denen sich ein invarianter Elektrolyt befindet. Die Brennstoffzelle liefert kontinuierlich dadurch Strom, daß die zu oxidierende Substanz, d.h. der sogenannte Brennstoff, wie z.B. Wasserstoff, der durch Spaltung von Erdgas, Methanol, Hydrazin, Ammoniak etc. gewonnen wird, und das Oxidationsmittel, z.B. Sauerstoff, kontinuierlich zugeführt und die Oxidationsprodukte, z.B. Wasser, kontinuierlich abgeführt werden.

Mit Beginn des Einsatzes von polymeren Membranen als invarianter Feststoffelektrolyt richtete sich die Aufmerksamkeit auf protonenleitende Membranen auf Basis perfluorierter Sulfonsäureeinheiten enthaltender lonomere, wie z.B. Perfluoroalkyl-Sulfonsäure-Polymerelektrolyte. Eine derartige Membran ist beispielsweise unter der Marke Nafion^{®} von Du Pont erhältlich. Solche Membranen sind heterogene Systeme. Die hydrophilen und hydrophoben Polymerbausteine bilden eine Clusterstruktur, in die, als Voraussetzung für eine hohe Leitfähigkeit, Wasser eingelagert wird. Der Ladungstransport ist bei diesen heterogenen Systemen an die flüssige, d.h. wässrige Phase gebunden. Die Tatsache, daß Wassermoleküle in diesen Protonenleitern als Protonencarrier fungieren, bedingt, daß die Wasserkonzentration in der Zelle konstant gehalten werden muß. Letzteres ist problematisch, da Wasser stets als Oxidationsprodukt bei der Reaktion erzeugt wird und daher kontrolliert abgeführt werden muß. Ebenfalls bedingt durch die Rolle der Wassermoleküle als Protonencarrier arbeiten die Brennstoffzellen nur bei Temperaturen unterhalb von 100°C, da bei Temperaturen oberhalb von 100°C Wasser aus den Membranen ausgetrieben wird. Damit verbunden sinkt die Leitfähigkeit, weshalb die Membranen auf einen Einsatz im Temperaturbereich unterhalb 100°C beschränkt sind (O. Savadogo et al., Journal of New Materials for Electrochemical Systems 1 (1998), S. 47-66). Ein weiteres Problem von Membranbrennstoffzellen auf Nafionbasis besteht darin, dass die verwendeten Katalysatoren im Temperaturbereich unterhalb 100°C besonders empfindlich auf Katalysatorgifte wie Kohlenmonoxid reagieren, und generell wenig effektiv arbeiten.

In U.S. Patent Nr. 5,525,436 wird eine polymere Feststoffelektrolytmembran beschrieben, die ein protonenleitendes Polymer umfaßt, welches bis zu Temperaturen von 400°C thermisch stabil ist. Das protonenleitende Polymer kann dabei ein basisches Polymer sein, vorzugsweise Polybenzimidazol (PBI), welches mit einer starken Säure, vorzugsweise Schwefelsäure oder Phosphorsäure, dotiert ist. Ein basisches Polymer, wie PBI führt bei Dotierung mit einer starken oder stabilen Säure, wie Schwefelsäure oder Phosphorsäure, zu einem Polymerelektrolyt, der ein Einphasensystem bildet, worin die Säure durch das Polymer komplexiert wird, im Gegensatz zu den vorher beschriebenen heterogenen wasserhaltigen Systemen, in denen der Ladungstransport an die flüssige Phase gebunden ist.

Bei den beispielsweise in U.S. Patent Nr. 5,525,436 beschriebenen einphasigen Elektrolytsystemen werden (ebenfalls im Gegensatz zu den heterogenen Systemen), technisch relevante Leitfähigkeiten erst bei Temperaturen oberhalb von 100°C erreicht. Die Leitfähigkeit der Membranen ist abhängig von der Phosphorsäurekonzentration und der Dotierungszeit, aber nicht nennenswert vom Wassergehalt. Der Säureaustrag bei Temperaturen oberhalb 100°C ist vernachlässigbar. Aus diesen Gründen und wegen der hohen Oxidationsbeständigkeit des Polymeren wurden mit Phosphorsäure dotierte PBI-Membranen als Elektrolyt und Separator für Brennstoffzellen im Arbeitstemperaturbereich oberhalb von 100°C, beispielsweise etwa 160°C entwickelt.

Die Phosphorsäure-dotierten PBI-Membranen werden in einem Zweistufenverfahren hergestellt, wobei in der ersten Stufe das PBI in Dimethylacetamid (DMAc), welches 2% Lithiumchlorid (LiCl) enthält, gelöst und die Lösung durch Gießen oder Sprühen in die Form eines Films gebracht wird. Nach dem Trocknen des Films wird das LiCl mit Wasser aus dem Film extrahiert. Als Zwischenprodukt wird eine amorphe und flexible Membran erhalten. In der zweiten Stufe wird die Membran mit Schwefelsäure (H₂SO₄) bzw. vorzugsweise mit Phosphorsäure (H₃PO₄) dotiert. Durch die Dotierung wird die Membran teilkristallin. Dadurch und in Verbindung mit dem Dotierungsgrad wird die mechanische Belastbarkeit der Membran herabgesetzt. Verstärkt wird dieser Effekt durch eine zusätzliche Quellung mit Wasser, z.B. bei der Lagerung der Membran, oder bei der Aufnahme von Wasser, welches beim Betrieb der Brennstoffzelle entsteht.

Aus EP 0 9 67 674 A1 sind PBI-Membrane bekannt, die mit Di(2-ethylhexyl)-phosphorsäureester dotiert sind. Unter Verwendung der zweistufigen Immersionsmethode wurden hier trotz sehr hoher Konzentrationen des Dotierungsmittels in der Immersionslösung keine ausreichenden Dotierungsgrade erzielt (höchstens 0,03 Gew.-% Dotierungsmittel bezogen auf die Gesamtmembran). Wenn auf der anderen Seite die Dotierung von PBI mit Di(2-ethylhexyl)phosphorsäureester nach der Lösungs-Blend-Methode in TFA mit mindestens 51 Gew.-% Di(2-ethylhexyl)phosphorsäureester erfolgte, gestatteten die so dotierten Polymere mit dem angewandten Verfahren keine Herstellung von Filmen.

Zur Erhöhung der mechanischen Festigkeit wurde vorgeschlagen, z.B. , in WO 00/44816, die Polymermembran aus beispielsweise PBI mit Hilfe eines Vernetzungsmittels zu vernetzen. Damit lässt sich zwar die mechanische Festigkeit erhöhen und damit das Problem der Sprödigkeit zum Teil beseitigen, jedoch weisen derartige vernetzte Polymerelektrolyten eine verringerte Leitfähigkeit und Quellbarkeit mit Phosphorsäure auf.

Damit steht dem Vorteil, die beschriebenen einphasigen, Phosphorsäure-dotlerten PBI-Membranen bei Temperaturen oberhalb von 100°C einsetzen zu können, eine Reihe von Nachteilen gegenüber. Die Membranen können nur in einem zweistufigen Verfahren hergestellt werden, was zeit- und materialaufwendlg ist und somit die Produktionskosten erhöht. Die polymere Elektrolytmembran weist aufgrund der bereits anfänglich vorhandenen und noch zunehmenden Kristallinität sowie des hohen Dotierungsgrades mit dem Dotierungsmittel eine abnehmende mechanische Festigkeit auf, die zu einer Deformation der Membran bis hin zu ihrer Zerstörung führen kann. Aus diesem Grund muß die Membran vor ihrem Gebrauch unter Wasserausschluß gelagert werden. Ferner nimmt die Leistung einer unterhalb von 100°C betriebenen Brennstoffzelle, welche derartige polymere Elektrolytmembranen aufweist, mit der Zeit ab, da die Membran in diesem Temperaturbereich Wasser aufnimmt, welches die Säure (z.B. Phosphorsäure) verdünnt und ausschwemmt.

Zur Vereinfachung des zweistufigen Herstellungsverfahrens wird in U.S. Patent Nr. 5,716,727 ein einstufiges Verfahren zur Herstellung von mit Phosphorsäure dotierten PBI-Membranen vorgeschlagen. Dabei wird eine Lösung, bestehend aus PBI, Phosphorsäure und Trifluoressigsäure als Lösungsmittel, hergestellt und durch Gießen nach Verdampfen des Lösungsmittels zu einer Membran geformt.

Dieses Verfahren gestattet es zwar, eine mit Phosphorsäure dotierte PBI-Membran in einem einzigen Verfahrensschritt herzustellen, jedoch weist auch dieses Verfahren gravierende Nachteile auf. Zunächst weist die erhaltene Membran ebenfalls eine anfänglich bereits vorhandene und zunehmende Kristallinität und damit Sprödigkeit mit den vorstehend beschriebenen Nachteilen auf. Ein entscheidender Nachteil dieses Verfahrens ist jedoch die zwangsweise Verwendung von Trifluoressigsäure. Trifluoressigsäure ist leicht flüchtig, äußerst aggressiv, toxisch und weist einen niedrigen Flammpunkt auf. Deshalb kann dieses Verfahren nur in geschlossenen Systemen und unter erhöhten Sicherheitsvorkehrungen durchgeführt werden. Jedenfalls ist das vorgeschlagene Verfahren jedoch wegen der schwierig zu entsorgenden Trifluoressigsäure sehr umweltbelastend.

Eine Aufgabe der vorliegenden Erfindung besteht daher darin, eine protonenleitende Elektrolytmembran bereitzustellen, welche die Nachteile der im Stand der Technik bekannten Elektrolytmembranen nicht aufweist. Insbesondere soll eine protonenleitende Elektrolytmembran bereitgestellt werden, die eine hohe, konstante Leitfähigkeit, eine hohe mechanische Stabilität und Flexibilität und eine ausgezeichnete chemische und thermische Beständigkeit aufweist und die in einem weiten Temperaturbereich von unterhalb 100°C bis 200°C in Brennstoffzellen eingesetzt werden kann.

Eine weitere Aufgabe der vorliegenden Erfindung besteht darin, ein einfaches Verfahren bereitzustellen, mit dem die erfindungsgemäße protonenleitende Elektrolytmembran kostengünstig und umweltschonend hergestellt werden kann.

Schließlich ist es eine Aufgabe der vorliegenden Erfindung, eine Brennstoffzelle zur Verfügung zu stellen, welche die erfindungsgemäße protonenleitende Elektrolytmembran enthält.

Diese Aufgaben werden durch die in den Ansprüchen definierten Gegenstände gelöst.

Die Erfindung beruht dabei auf der Erkenntnis, daß eine ein Einphasensystem darstellende, protonenleitende Elektrolytmembran mit hoher mechanischer Stabilität und Flexibilität, ausgezeichneter chemischer und thermischer Beständigkeit und hoher konstanter Leitfähigkeit, die in einem weiten Temperaturbereich von etwa Raumtemperatur bis 200°C in Brennstoffzellen eingesetzt werden kann, in einem einstufigen Verfahren ohne Einsatz problematischer Ausgangsmaterialien auf einfache Weise hergestellt werden kann, indem mindestens ein Basismaterial oder ein Gemisch von Basismaterialien zusammen mit mindestens einem Dotierungsmittel und gegebenenfalls einem Vernetzer in einem Lösungsmittel gelöst werden, wobei das Dotierungsmittel das Reaktionsprodukt einer mindestens zweibasigen anorganischen Säure, ausgewählt aus der Gruppe umfassend Phosphorsäure und Schwefelsäure, mit einer organischen Verbindung ist, ausgewählt aus der Gruppe umfassend lineare oder verzweigte, substituierte oder unsubstituierte aliphatische Alkohole mit 5 bis 20 Kohlenstoffatomen und lineare oder verzweigte, substituierte oder unsubstituierte aliphatische Amine mit 5 bis 20 Kohlenstoffatomen, wobei das Reaktionsprodukt eine (nicht umgesetzte) acide Hydroxylgruppe der anorganischen Säure aufweist, der das Dotierungsmittel das Kondensationsprodukt dieser organischen Verbindung mit Phosphorsäure oder Schwefelsäure ist, und wobei die Membran das Dotierungsmittel in einer Konzentration von 10 bis <30 Gew.-%, bezogen auf das Gesamtgewicht der getrockneten dotierten Membran, enthält. Danach wird die Lösung in die Form eines Films gebracht und anschließend das Lösungsmittel zum Beispiel durch Verdampfen entfernt, wodurch die erfindungsgemäße dotierte protonenleitende Elektrolytmembran erhalten wird.

Die erfindungsgemäß zur Herstellung der Elektrolytmembran verwendete Lösung weist ausgezeichnete Filmbildungseigenschaften auf. Dies gestattet ein problemloses, in der Film- bzw. Membranherstellung häufig eingesetztes Maschinenziehen der Lösung, wodurch eine sehr gleichmäßige Membran erhalten werden kann.

Ferner stellt die vorliegende Erfindung ein Verfahren zur Herstellung einer protonenleitenden Elektrolytmembran bereit, bei dem man in einer einzigen Stufe ein keramisches Material als ein Basismaterial (welches einem Fachmann auf dem Gebiet der Brennstoffzellentechnik bekannt ist) oder ein Gemisch von keramischen Materialien (oder ein Gemisch von keramischen Materialien und einem Polymermaterial) als Basismaterial mit einem Dotierungsmittel in einem Lösungsmittel imprägniert bzw. benetzt bzw. tränkt; und das Lösungsmittel entfernt. Dabei ist alls Dotierungsmittel das Reaktionsprodukt von einer mindestens zweibasigen anorganischen Säure, ausgewählt aus der Gruppe umfassend Phosphorsäure und Schwefelsäure, mit einer organischen Verbindung, ausgewählt aus der Gruppe umfassend lineare oder verzweigte, substituierte oder unsubstituierte aliphatische Alkohole mit 5 bis 20 Kohlenstoffatomen und lineare oder verzweigte, substituierte oder unsubstituierte aliphatische Amine mit 5 bis 20 Kohlenstoffatomen, wobei das Reaktionsprodukt eine (nicht umgesetzte) acide Hydroxylgruppe der anorganischen Säure aufweist und wobei die Lösung das Dotierungsmittel in einer Konzentration von etwa 1 bis etwa 20 Gew.-%, bezogen auf die gesamte Lösung, enthält.

Da weder bei der Herstellung noch beim bestimmungsgemäßen Gebrauch der Membran für die Protonenleitung Wasser benötigt wird und da auch das Dotierungsmittel weder Wasser enthält, noch wasserlöslich ist oder Wasser aufnimmt (also nicht hygroskopisch ist) ist die ein Einphasensystem darstellende Membran amorph und behält ihre ausgezeichnete Stabilität und Flexibilität bei, da ein zur Ausbildung und zum Fortschreiten der Kristallinität führende Substanzen wie H₃PO₄ nicht enthalten sind. Weil das Dotierungsmittel, wie erwähnt, weder wasserlöslich noch hygroskopisch ist, sind keine besonderen Vorkehrungen zum Wasserausschluß bei der Lagerung notwendig und die Membran kann problemlos über lange Zeit ohne Veränderung ihrer Filmeigenschaften unter normalen Bedingungen gelagert werden. Überdies wirkt das Dotierungsmittel in den erfindungsgemäßen Elektrolytmembranen als Weichmacher. Ebenfalls aufgrund der Wasserunlöslichkeit des Dotierungsmittels findet keine Verdünnung während des Betriebs der Brennstoffzelle wegen des dabei erzeugten Wassers statt und somit wird das Dotierungsmittel auch nicht aus der Membran ausgetrieben. Dies führt zum einen dazu, daß die Membran ihre hohe Leitfähigkeit über lange Zeit konstant beibehält, wodurch die Brennstoffzelle über lange Zeit mit konstant hoher Leistung betrieben werden kann, und zum anderen, daß die Brennstoffzelle in einem weiten Temperaturbereich, beispielsweise zwischen etwa 20°C und etwa 200°C, vorzugsweise zwischen etwa 50°C und etwa 200°C und besonders bevorzugt zwischen etwa 140°C und etwa 180°C, oder sogar über 200°C betrieben werden kann.

Bei herkömmlichen, einphasigen, mit z.B. Phosphorsäure dotierten PBI-Membranen für Brennstoffzellen ist es notwendig, daß das Dotierungsmittel im molaren Überschuß in dem die Membran bildenden Polymer zugegen ist. So offenbart beispielsweise U.S. Patent Nr. 5,525,436 eine Konzentration des Dotierungsmittels (Schwefelsäure bzw. Phosphorsäure) von mindestens 200 Mol.-% bis hin zu 470 Mol.-% Säure, d.h. 1 bis 3,7 Moleküle Säure auf jede Polymerwiederholungseinheit.

Hier liegt ein weiterer erheblicher Vorteil der erfindungsgemäßen Elektrolytmembran, bei der eine ausgezeichnete Leitfähigkeit der Elektrolytmembran und eine daraus sich ergebende hohe Leistung der Brennstoffzelle bereits mit einer wesentlich niedrigeren Konzentration des Dotierungsmittels erreicht werden kann. In den erfindungsgemäßen Elektrolytmembranen führt eine Konzentration von etwa 10 Gew.-% bis etwa 40 Gew.-%., vorzugsweise etwa 20 Gew.-% bis etwa 40 Gew.-%., bezogen auf das Gesamtgewicht der getrockneten dotierten Membran, zu einer ausgezeichneten und konstanten Leistung der Brennstoffzelle. Überraschenderweise läßt sich die Leistung der Brennstoffzelle sogar noch steigern, wenn die Konzentration des Dotierungsmittels unter 30 Gew.-%, vorzugsweise bis etwa 20 Gew.-%, gesenkt wird. Die herabgesetzte Konzentration des Dotierungsmittels, verbunden mit der Tatsache, daß erfindungsgemäß nicht die freie Säure als Dotierungsmittel eingesetzt wird, sondern ein Reaktionsprodukt einer mehrbasigen (starken) anorganischen Säure mit einer organischen Verbindung, beispielsweise ein Diester der Phosphorsäure, führen überdies zu einer längeren Lebensdauer der Membran in der Brennstoffzelle.

Gemäß der vorliegenden Erfindung können ein oder mehrere Polymere und/oder ein oder mehrere keramische Materialien als Basismaterial für die protonenleitende Elektrolytmembran verwendet werden.

Vorzugsweise werden wegen ihrer ausgezeichneten Widerstandsfähigkeit gegen Oxidation und wegen ihrer hohen thermischen Stabilität basische Polymere verwendet. Geeignete basische Polymere schließen Polybenzimidazol, Polypyridin, Polypyrimidin, Polyimidazole, Polybenzthiazole, Polybenzoxazole, Polyoxadiazole, Polychinoxaline, Polythiadiazole und Poly(tetrazapyrene) oder eine Kombination von zwei oder mehreren davon ein.

Besonders bevorzugt sind erfindungsgemäß basische Polymere mit der nachstehend angegebenen allgemeinen Formel: 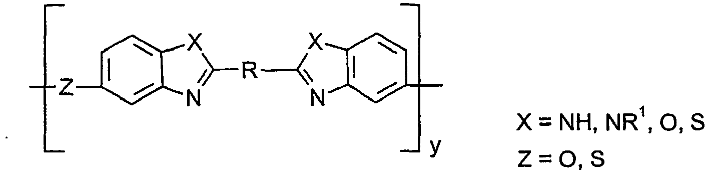 wobei R: 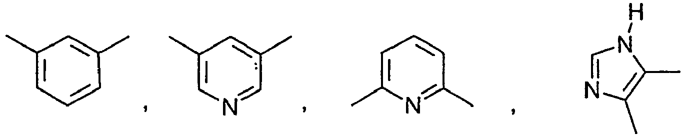 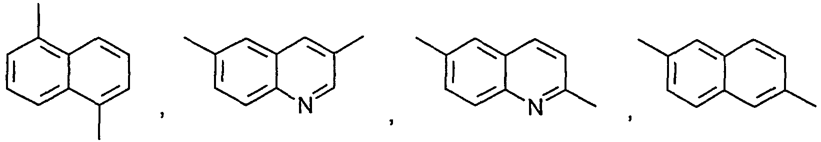 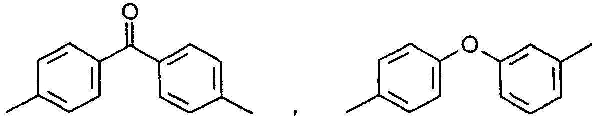 oder eine zweiwertige Verknüpfungsgruppe, wie eine lineare oder verzweigte, substituierte oder unsubstituierte, gegebenenfalls perfluorierte Kohlenwasserstoffgruppe ist und wobei R¹ beispielsweise eine substituierte oder unsubstituierte Alkyl-, Aryl-, Heteroarylgruppe oder heterocyclische Gruppe sein kann.

Ein erfindungsgemäßes basisches Polymer, wobei Z = O, X = NH und R = eine 1,2-Phenylen-, eine 1,3-Phenylen- oder eine 1,4-Phenylengruppe ist, ist auch bevorzugt.

Erfindungsgemäß bevorzugt ist Polybenzimidazol (PBI) mit der Formel:

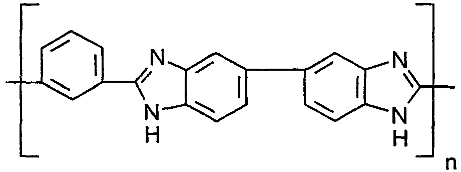

Sofern die mechanische Festigkeit der Elektrolytmembran noch weiter erhöht werden soll oder wenn ein Polymer mit einem relativ niedrigen Molekulargewicht eingesetzt wird, kann der für die Herstellung der Membran verwendeten Lösung ein Vernetzer zugesetzt werden. Hierfür kommen prinzipiell alle mindestens zwei funktionelle Gruppen aufweisenden Verbindungen in Frage, welche mit dem bzw. den verwendeten Polymer bzw. Polymeren unter Ausbildung kovalenter Bindungen reagieren können. Bevorzugt sind dabei Verbindungen mit mindestens zwei Epoxidgruppen im Molekül. Besonders bevorzugt ist bei den erfindungsgemäßen Elektrolytmembranen, insbesondere denen auf Basis von PBI, 1,4-Butandioldiglycidylether als Vernetzer.

Der Vernetzer kann, sofern gewünscht, in einer Menge von 1 bis 30 Gew.-%, vorzugsweise 10 bis 30 Gew.-%, besonders bevorzugt 20 bis 30 Gew.-%, bezogen auf das Gesamtgewicht aus Polymer bzw. basischem Polymer und Vernetzer zugegeben werden. Die erforderliche Menge an Vernetzer richtet sich nach der Molmasse des verwendeten Polymers.

Als Lösungsmittel für die zur Elektrolytmembranherstellung verwendete Lösung kommen grundsätzlich alle Lösungsmittel in Frage, in denen sich das bzw. die Polymer bzw. Polymeren löst bzw. lösen. Vorzugsweise ist das Lösungsmittel ausgewählt aus der Gruppe, umfassend N-Methylpyrrolidon (NMP), Dimethylformamid (DMF), Dimethylsulfoxid (DMSO), Dimethylacetamid (DMAc) und Gemischen davon, wobei Dimethylacetamid besonders bevorzugt ist.

Die Konzentration des bzw. der Polymer(en) in der Lösung liegt im Bereich von 10 Gew.-% bis 50. Gew.-%, vorzugsweise 20 Gew.-% bis 40 Gew.-% und mehr bevorzugt 25 Gew.-% bis 35 Gew.-%, bezogen auf das Gewicht der fertigen, zur Membranherstellung verwendeten Lösung. Die Konzentration ist dabei abhängig von der Art des bzw. der Polymer (en) und dessen/deren Molekulargewicht und Löslichkeit in dem betreffenden Lösungsmittel bzw. Lösungsmittelgemisch sowie des Anteils einen Vernetzers.

Das Dotierungsmittel für die erfindungsgemäße protonenleitende Elektrolytmembran ist das Reaktionsprodukt aus einer starken, mindestens zweibasigen anorganischen Säure und einer organischen Verbindung, die mit der anorganischen Säure kovalente Bindungen ausbilden kann.

Als Säure werden Phosphorsäure oder Schwefelsäure eingesetzt, wobei Phosphorsäure besonders bevorzugt ist.

Die organische Verbindung, welche mit der anorganischen Säure umgesetzt wird, ist ausgewählt aus der Gruppe, umfassend lineare oder verzweigte, gegebenenfalls substituierte aliphatische Alkohole mit 5 bis 20, vorzugsweise 6 bis 16, mehr bevorzugt 7 bis 12, am meisten bevorzugt 8 bis 10 Kohlenstoffatomen; lineare oder verzweigte, gegebenenfalls substituierte aliphatische Amine mit 5 bis 20, vorzugsweise 6 bis 16, mehr bevorzugt 7 bis 12, am meisten bevorzugt 8 bis 10 Kohlenstoffatomen; Unter den organischen Verbindungen ist 2-Ethylhexanol für die Umsetzung mit der anorganischen Säure, vorzugsweise Phosphorsäure, besonders bevorzugt.

Die Umsetzung der mindestens zweibasigen anorganischen Säure mit der organischen Verbindung ist so durchzuführen, daß eine acide OH-Gruppe, d.h. eine Hydroxylgruppe der anorganischen Säure unumgesetzt bleibt. Dabei können bei einer dreibasigen Säure, wie beispielsweise Phosphorsäure, zwei der aciden OH-Gruppen über ein organische Verbindung mit zwei funktionellen Gruppen, beispielsweise über ein Diol verbrückt, d.h. unter Ausbildung eines Ringes beispielsweise verestert sein.

Die erfindungsgemäß bevorzugten Dotierungsmittel sind Phosphorsäurediester, wie Di-(2-ethylhexyl)phosphorsäureester und Diphenylphosphorsäureester, wobei Di-(2-ethylhexyl)phosphorsäureester am meisten bevorzugt ist.

Die Lösung zur Herstellung der Elektrolytmembran enthält das Dotierungsmittel in einer Konzentration von etwa 1 bis etwa 20 Gew.-%, vorzugsweise etwa 3 bis etwa 15 Gew.-%, mehr bevorzugt etwa 3 bis etwa 12 Gew.-%, bezogen auf das Gesamtgewicht der zur Herstellung der Membran verwendeten Lösung. Dies führt zu einer Konzentration des Dotierungsmittels in der getrockneten Elektrolytmembran von etwa 10 bis etwa 40 Gew.-%, vorzugsweise etwa 20 bis etwa 40 Gew.-%, besonders bevorzugt etwa 20 bis etwa 30 Gew.-%, bezogen auf das Gesamtgewicht der trockenen und dotierten Membran. Das erfindungsgemäß verwendete Dotierungsmittel sollte soweit wie möglich gegen einen oxidativen Angriff beständig sein. Ferner darf das Dotierungsmittel nur zu einem vernachlässigbaren Ausmaß in Wasser löslich sein, d.h. es darf sich zu nicht mehr als etwa 3 Gew.-%, vorzugsweise nicht mehr als etwa 2 Gew.-% in Wasser lösen. Es ist am meisten bevorzugt, daß das Dotierungsmittel in Wasser praktisch unlöslich ist.

Die erfindungsgemäßen protonenleitenden Elektrolytmembranen können auf folgende Weise hergestellt werden.

Das in Form eines oder mehrerer poröser Flächengebilde vorliegende Basismaterial, das beispielsweise aus einem oder mehreren Polymeren und/oder einem keramischen Material oder mehreren keramischen Materialien oder einem Gemisch aus einem oder mehreren Polymeren und einem oder mehreren keramischen Materialien besteht, wird mit dem Dotierungsmittel behandelt, wobei es von dem porösen Flächengebilde als Imprägnierung aufgenommen wird. In einer bevorzugten Ausführungsform wird ein keramisches pulverförmiges Material als eines der Basismaterialien in einer Flüssigkeit dispergiert, und die Dispersion wird mit einem Polymer oder mit mehreren Polymeren als weitere Basismaterialien versetzt. Dann werden die Polymere gegebenenfalls bei erhöhter Temperatur in Lösung gebracht und das Dotierungsmittel hinzugefügt. Vorteilhaft ist es, wenn die Flüssigkeit gleichzeitig. Lösungsmittel für die Polymere ist. Die erhaltene Dispersion mit den gelösten Polymeren und dem Dotierungsmittel wird anschließend auf eine flächige Unterlage oder durch Maschinenziehen in die Form eines Films gebracht, das Lösungsmittel wird entfernt und die erhaltene Membran gegebenenfalls bei erhöhter Temperatur getrocknet.

In einer besonders bevorzugten Ausführungsform wird das Basismaterial, beispielsweise ein Polymer bzw. das Gemisch aus zwei oder mehreren Basismaterialien, beispielsweise Polymere, bei erhöhter Temperatur in dem Lösungsmittel gelöst. Anschließend wird unter Rühren der Vernetzer und danach das Dotierungsmittel zugegeben. Die gegebenenfalls nach Filtration erhaltene homogene Lösung wird mit geeigneten Mitteln, beispielsweise durch Gießen auf eine flächige (ebene) Unterlage oder durch Maschinenziehen in die Form eines Films gebracht. Anschließend wird das Lösungsmittel entfernt und die erhaltene Membran gegebenenfalls bei erhöhter Temperatur getrocknet.

Die resultierende Elektrolytmembran weist eine Dicke im Bereich von etwa 10 bis etwa 200 µm, vorzugsweise etwa 20 bis etwa 100 µm und mehr bevorzugt von etwa 30 bis etwa 80 µm auf.

Die vorliegende Erfindung wird durch die nachfolgenden, nicht beschränkenden Beispiele näher erläutert. Prozentangaben beziehen sich dabei, wenn nicht anders angegeben, auf das Gewicht.

### Beispiele

### Beispiel 1

### Herstellung der dotierten Polymermembran:

15 g Polybenzimidazol (PBI) mit einer intrinsischen Viskosität bzw. Grenzviskosität* von 0,4 dl/g werden in 35 g N,N-Dimethylacetamid (Hersteller: Sigma-Aldrich) gelöst, indem zwei Stunden bei einer Temperatur von 170°C unter Rückfluß gekocht wird. Die Lösung wird unter Rühren mit 5 g Butandioldiglycidylether und danach mit 5 g Di-(2-ethylhexyl)phosphorsäureester versetzt. Anschließend wird die Lösung für 15 min auf 80°C erwärmt, um eine homogene Lösung zu erhalten. Nach Filtration und Entgasen der Lösung werden nun Membranen auf Glasplatten mit einem Rakelmesser hergestellt, die jeweils für eine Stunde bei 80°C, 120°C und 150°C getrocknet werden. Die Membranen können einfach von der Glasplatte abgezogen und für den Aufbau einer Membran-Elektroden-Einheit (MEA) verwendet werden.

Eine wie oben hergestellte Membran weist eine durchschnittliche Dicke von 55 µm auf und ist mit 20 Gew.-% Di-(2-ethylhexyl)phosphorsäureester, bezogen auf das Gesamtgewicht der trockenen Membran, dotiert.

* Die Viskosität wurde mit Hilfe einer 1 Gew.-%-igen Lösung von PBI in N,N-Dimethylacetamid ermittelt. Aus dieser intrinsischen Viskosität kann mit Hilfe der Mark-Houwink-Beziehung eine mittlere Molmasse des PBI's von 16000 g/mol errechnet werden.

### Beispiel 2

### Charakterisierung der Membran:

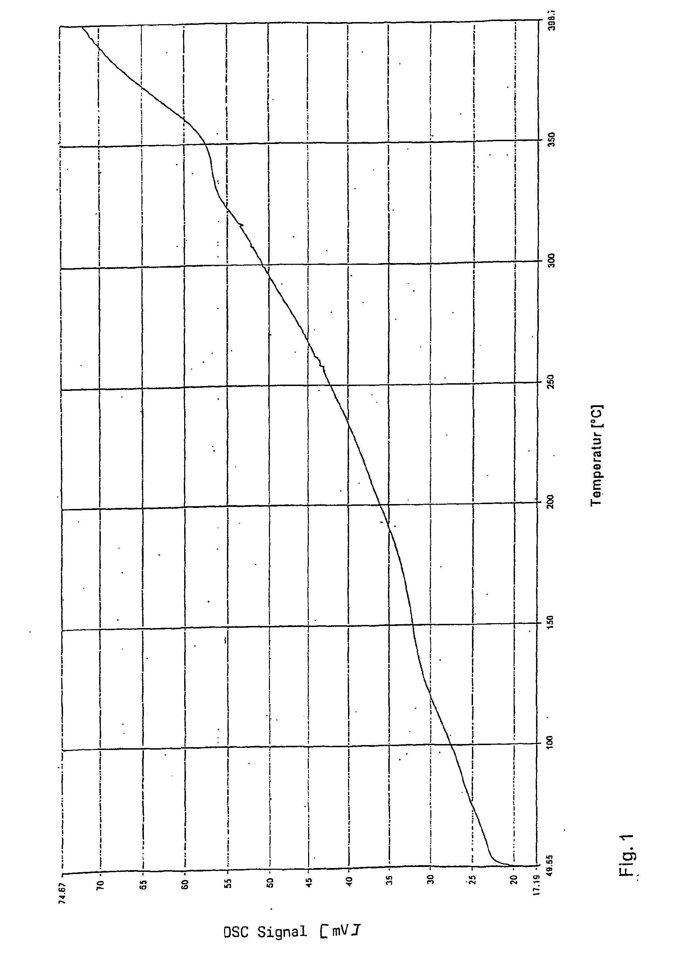

Die nach Beispiel 1 hergestellte Membran ist im untersuchten Temperaturbereich vollständig amorph wie Fig. 1 zeigt. Das Thermogramm (Fig. 1) wurde mit einem DSC (Differentialscanningkalorimeter) der Firma Perkin Elmer aufgenommen. Die Aufheizrate betrug 20K/min.

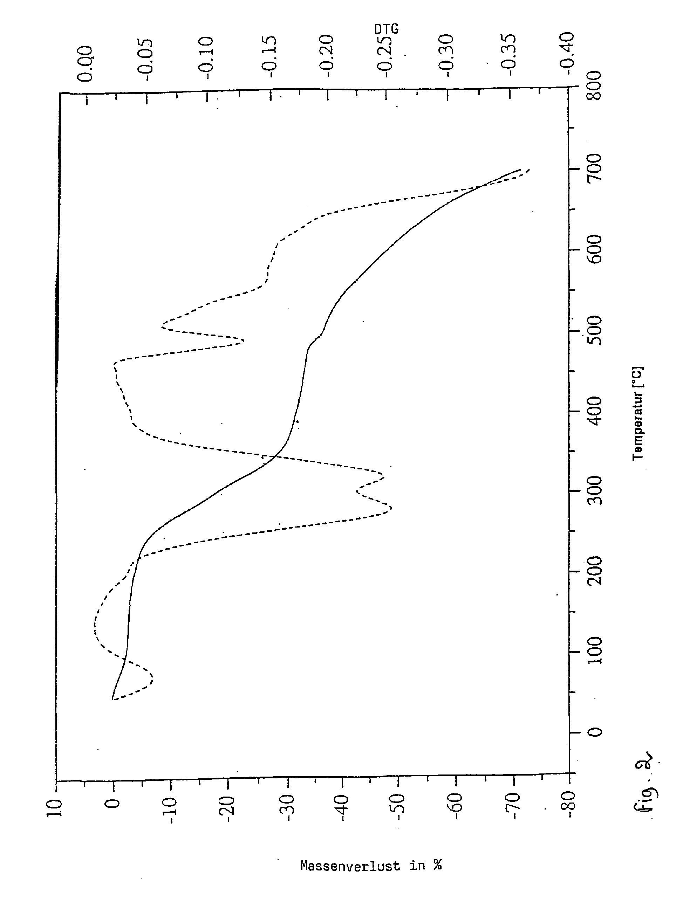

Die thermische Stabilität der Membran wurde durch TG-Messungen (Thermogravimetrie-Messungen) mittels NETZSCH TG-209 ermittelt. Die Aufheizrate betrug 10K/min. Die Ergebnisse der Thermogravimetrie sind in Fig. 2 dargestellt. Ein signifikanter Masseverlust kann erst bei Temperaturen oberhalb 250°C beobachtet werden. Die mechanische Stabilität der Membran wurde durch Berstdruckmessungen ermittelt. Hierzu wurde ein Eigenbaugerät der Firma Sartorius eingesetzt. Der Berstdruck für die untersuchten Membranen ist > 1,5 bar.

### Beispiel 3

### Herstellung einer Membran-Elektroden-Einheit (MEA):

Für die Herstellung einer Membran-Elektroden-Einheit (MEA) wird eine nach Beispiel 1 hergestellte Membran in ca. 61 cm² große quadratische Stücke geschnitten. Kommerziell erhältliche ELAT-Elektroden mit 2,0 mg/cm² Pt-Belegung und einer Fläche von 10 cm² der Firma E-TEK werden im Vakuum mit konzentrierter Phosphorsäure bei Raumtemperatur imprägniert und anschließend mit der erfindungsgemäßen Membran in eine übliche Anordnung in die Testbrennstoffzelle der Firma Fuel Cell Technologies, Inc. eingebaut. Die Zelle wird mit einem Anpressdruck von 30 MPa verschlossen. Bei 160°C und 3 bar Wasserstoff- und Luftdruck wird eine maximale Leistungsdichte von 0,6 W/cm² und eine Stromdichte von ca. 1,7 A/cm² erzielt. Dabei werden unbefeuchtete Gase eingesetzt.

### Beispiel 4

### Leistungsparameter bei 160°C:

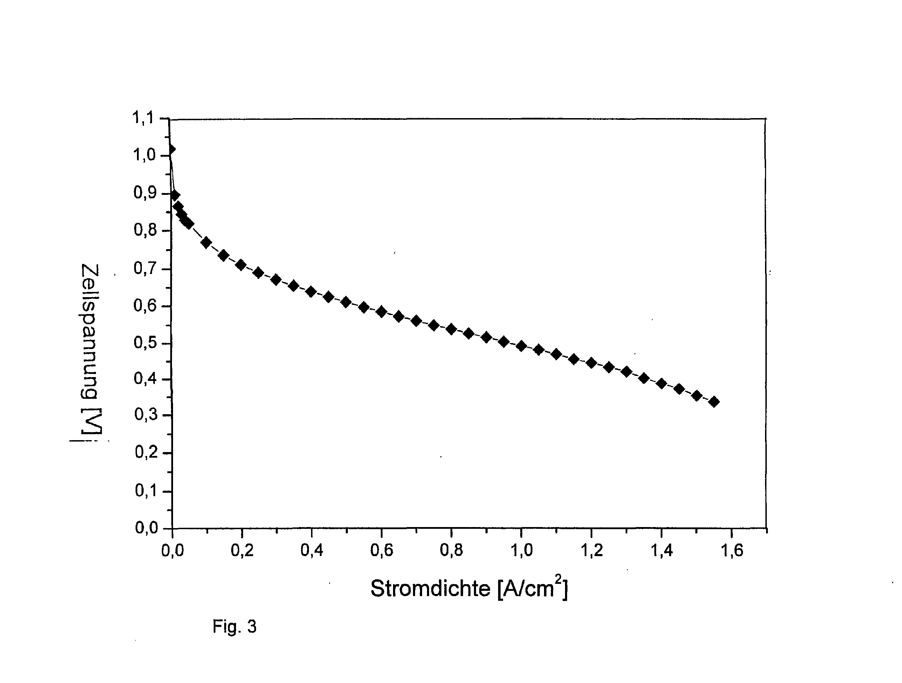

In Fig. 3 ist der Verlauf einer Strom-Spannungskurve für eine nach Beispiel 3 hergestellte MEA bei 160°C aufgezeigt. Der Gasfluss für H₂ betrug 170 ml/min und für Luft 570 ml/min. Die Leistungsparameter wurden an einem FCATS Advanced Screener der Firma Hydrogenics Corporation, Kanada, ermittelt.

Die Leitfähigkeit der Membran in der MEA beträgt 0,57 S/cm, gemessen mit einem Impedanzspektrometer IM6 der Firma ZAHNER-elektrik GmbH & Co. KG.

Die H₂-Permeabilität durch die Membran beträgt 0,036 m³_{N}/(m²·h·bar) bei 160°C, gemessen mit einem H₂-Sensor der Firma Dräger Safety AG & Co. KGaA.

### Beispiel 5

### Leistungsparameter bei 60°C:

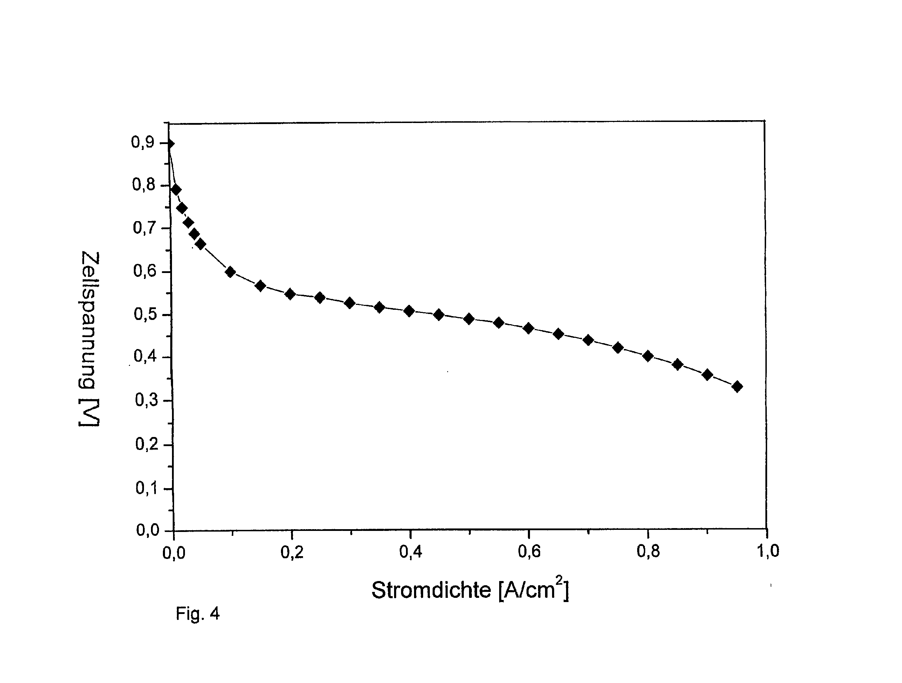

In Fig. 4 ist der Verlauf einer Strom-Spannungskurve für eine nach Beispiel 3 hergestellte MEA bei 60°C aufgezeigt. Der Gasfluss für H₂ betrug 170 ml/min und für Luft 570 ml/min. Die Leistungsparameter wurden an einem FCATS Advanced Screener der Firma Hydrogenics Corporation, Kanada, ermittelt.

Die H₂-Permeabilität durch die Membran beträgt 0,0054 m³_{N}/(m²·h·bar) bei 60°C, gemessen mit einem H₂-Sensor der Firma Dräger Safety AG & Co. KGaA.

### Beispiel 6

### Herstellung der dotierten Membran:

47,8 g Polybenzimidazol (PBI) mit einer intrinsischen Viskosität bzw. Grenzviskosität** von 0,86 dl/g werden in 191 g N,N-Dimethylacetamid (Hersteller: Sigma-Aldrich) gelöst, indem drei Stunden bei einer Temperatur von 200°C im Druckreaktor gekocht wird. Die erkaltete Lösung wird unter Rühren bei Raumtemperatur mit 2,5 g Butandioldiglycidylether und danach mit 10,4 g (Di-(2-ethylhexyl)phosphorsäureester versetzt. Anschließend wird die Lösung unter Rühren für 1 h auf 100°C erwärmt, um eine homogene Lösung zu erhalten. Nach Filtration und Endgasen der Lösung werden durch technisches Maschinenziehen Membranen hergestellt, welche 4h lang bei 200°C getrocknet werden.

Eine wie oben hergestellte Membran weist eine durchschnittliche Dicke von 45 µm auf und ist mit 22 Gew.-% Di-(2-ethylhexyl)phosphorsäureester, bezogen auf das Gesamtgewicht der trockenen Membran, dotiert.

**Die Viskosität wurde mit Hilfe einer 1 Gew.-%igen Lösung von PBI in N,N-Dimethylacetamid ermittelt. Aus dieser intrinsischen Viskosität kann mit Hilfe der Mark-Houwink-Beziehung eine mittlere Molmasse des PBI's von 55700 g/mol errechnet werden.

### Beispiel 7

### Herstellung einer Membran-Elektroden-Einheit (MEA) mit der Membran aus Beispiel 6:

Für die Herstellung einer Membran-Elektroden-Einheit (MEA) wird eine nach Beispiel 1 hergestellte Membran in ca. 104 cm² große quadratische Stücke geschnitten. Kommerziell erhältliche ELAT-Elektroden mit 2,0 mg/cm² Pt-Belegung und einer Fläche von 50 cm² der Firma E-TEK werden im Vakuum mit konzentrierter Phosphorsäure bei Raumtemperatur imprägniert und anschließend mit der erfindungsgemäßen Membran in eine übliche Anordnung in die Testbrennstoffzelle der Firma Fuel Cell Technologies, Inc., eingebaut. Die Zelle wird mit einem Anpressdruck von 6 MPa verschlossen. Bei 160°C und 3,5 bar Wasserstoff- und Luftdruck wird eine maximale Leistungsdichte von 0,6 W/cm² und eine Stromdichte von ca. 1,6 A/cm² erzielt. Dabei werden unbefeuchtete Gase eingesetzt.

### Beispiel 8

### Leistungsparameter bei 160°C der MEA aus Beispiel 7:

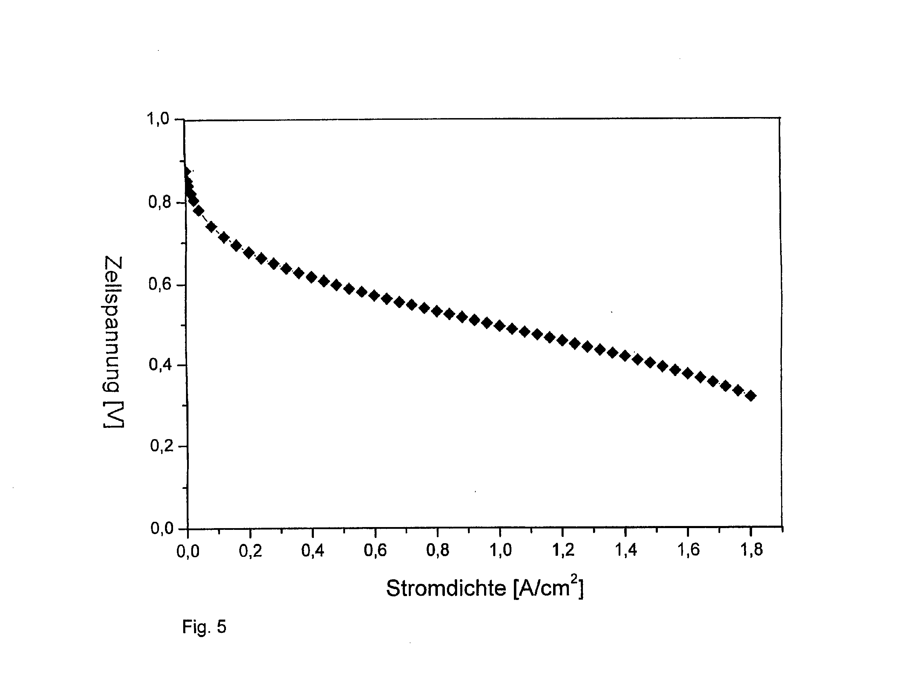

In Fig. 5 ist der Verlauf einer Strom-Spannungskurve für eine nach Beispiel 7 hergestellte MEA bei 160°C aufgezeigt. Der Gasfluss für H₂ betrug 1400 ml/min und für Luft 4580 ml/min. Die Leistungsparameter wurden an einem FCATS Advanced Screener der Firma Hydrogenics Corporation, Kanada, ermittelt.

### Beispiel 9

### Leistungsparameter bei 60°C der MEA aus Beispiel 7:

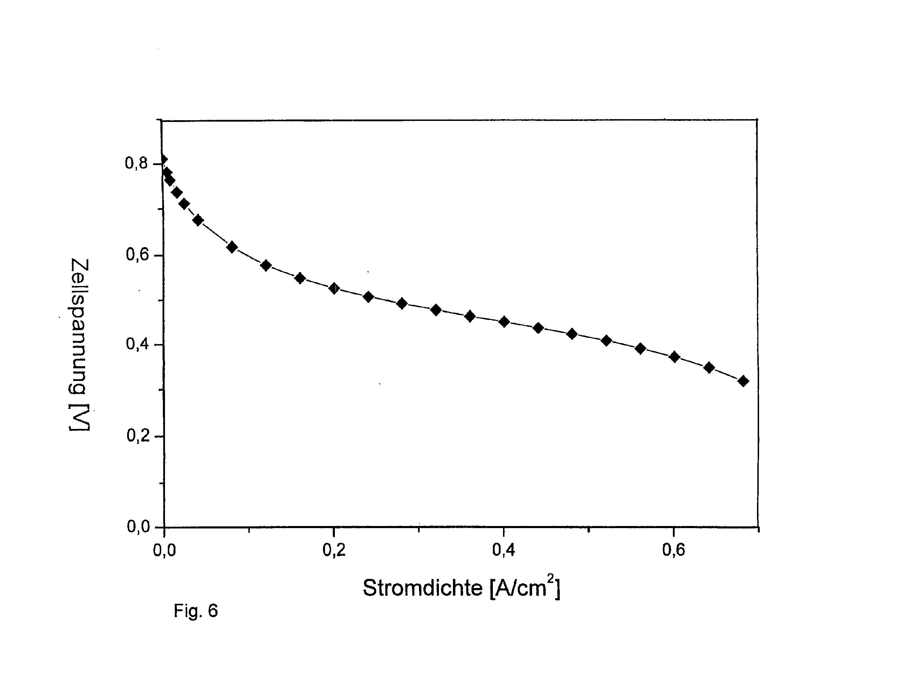

In Fig. 6 ist der Verlauf einer Strom-Spannungskurve für eine nach Beispiel 7 hergestellte MEA bei 60°C aufgezeigt. Der Gasfluss für H₂ betrug 910 ml/min und für Luft 2900 ml/min. Die Leistungsparameter wurden an einem FCATS Advanced Screener der Firma Hydrogenics Corporation, Kanada, ermittelt.

## Patentansprüche

1. Protonenleitende Elektrolytmembran, umfassend mindestens ein Basismaterial und mindestens ein Dotierungsmittel, wobei das Dotierungsmittel ein Reaktionsprodukt von einer mindestens zweibasigen anorganischen Säure, ausgewählt aus der Gruppe umfassend Phosphorsäure und Schwefelsäure, mit einer organischen Verbindung ist, ausgewählt aus der Gruppe umfassend lineare oder verzweigte, substituierte oder unsubstituierte aliphatische Alkohole mit 5 bis 20 Kohlenstoffatomen und lineare oder verzweigte, substituierte oder unsubstituierte aliphatische Amine mit 5 bis 20 Kohlenstoffatomen, wobei das Reaktionsprodukt eine unumgesetzte acide Hydroxylgruppe der anorganischen Säure aufweist, und wobei die Membran das Dotierungsmittel in einer Konzentration von 10 bis <30 Gew.-%, bezogen auf das Gesamtgewicht der getrockneten dotierten Membran, enthält.

2. Membran nach Anspruch 1, wobei das Basismaterial ein oder mehrere Polymere und/oder ein oder mehrere keramische Materialien enthält.

3. Membran nach Anspruch 1 oder 2, wobei das mindestens eine Basismaterial ein basisches Polymer ist, ausgewählt aus der Gruppe, umfassend Polybenzimidazol, Polypyridin, Polypyrimidin, Polyimidazole, Polybenzthiazole, Polybenzoxazole, Polyoxadiazole, Polychinoxaline, Polythiadiazole, Poly(tetrazapyrene) oder eine Kombination von zwei oder mehreren davon.

4. Membran nach Anspruch 3, wobei das basische Polymer Polybenzimidazol ist.

5. Membran nach einem der Ansprüche 1 bis 4, wobei die mindestens zweibasige anorganische Säure Phosphorsäure ist.

6. Membran nach einem oder mehreren der Ansprüche 1 bis 5, wobei die organische Verbindung zur Herstellung des Dotierungsmittels ein linearer oder verzweigter, substituierter oder unsubstituierter aliphatischer Alkohol mit 6 bis 16 Kohlenstoffatomen, insbesondere mit 7 bis 12 Kohlenstoffatomen, vorzugsweise 8 bis 10 Kohlenstoffatomen, ist.

7. Membran nach einem oder mehreren der Ansprüche 1 bis 6, wobei die organische Verbindung 2-Ethylhexanol ist.

8. Membran nach einem oder mehreren der Ansprüche 1 bis 7, wobei das Dotierungsmittel Di-(2-ethylhexyl)phosphorsäureester ist.

9. Membran nach einem oder mehreren der Ansprüche 1 bis 8, wobei die Membran das Dotierungsmittel in einer Konzentration von 10 bis 20 Gew.-%, bezogen auf das Gesamtgewicht der getrockneten dotierten Membran, enthält.

10. Membran nach einem oder mehreren der Ansprüche 3 bis 9, wobei das basische Polymer vernetzt ist.

11. Membran nach einem oder mehreren der Ansprüche 1 bis 10, wobei das Dotierungsmittel höchstens zu etwa 3 Gew.%, vorzugsweise höchstens zu etwa 2 Gew. -%, in Wasser löslich ist.

12. Membran nach einem oder mehreren der Ansprüche 1 bis 11, wobei die Elektrolytmembran eine Dicke von 10 bis 200 µm aufweist.

13. Verfahren zur Herstellung einer protorienleitenden Elektrolytmembran nach einem der Ansprüche 1 bis 12, wobei man
- ein Basismaterial oder ein Gemisch von Basismaterialien und ein Dotierungsmittel in einem Lösungsmittel löst, wobei das Dotierungsmittel ein Reaktionsprodukt von einer mindestens zweibasigen anorganischen Säure, ausgewählt aus der Gruppe umfassend Phosphorsäure und Schwefelsäure mit einer organischen Verbindung ist, ausgewählt aus der Gruppe umfassend lineare oder verzweigte, substituierte oder unsubstituierte aliphatische Alkohole mit 5 bis 20 Kohlenstoffatomen und lineare oder verzweigte, substituierte oder unsubstituierte aliphatische Amine mit 5 bis 20 Kohlenstoffatomen, wobei das Reaktionsprodukt eine unumgesetzte acide Hydroxylgruppe der anorganischen Säure aufweist, und wobei die Lösung das Dotierungsmittel in einer Konzentration von etwa 1 bis etwa 20 Gew.-%, bezogen auf die gesamte Lösung, enthält;
- die erhaltene Lösung in die Form eines Films bringt; und
- das Lösungsmittel entfernt.

14. Verfahren zur Herstellung einer protonenleitenden Elektrolytmembran nach einem der Ansprüche 1 bis 12, wobei man
- ein keramisches Material als ein Basismaterial oder ein Gemisch von keramischen Materialien als Basismaterial mit einem Dotierungsmittel in einem Lösungsmittel imprägniert, wobei das Dotierungsmittel ein Reaktionsprodukt von einer mindestens zweibasigen anorganischen Säure, ausgewählt aus der Gruppe umfassend Phosphorsäure und Schwefelsäure, mit einer organischen Verbindung ist, ausgewählt aus der Gruppe umfassend lineare oder verzweigte, substituierte oder unsubstituierte aliphatische Alkohole mit 5 bis 20 Kohlenstoffatomen und lineare oder verzweigte, substituierte oder unsubstituierte aliphatische Amine mit 5 bis 20 Kohlenstoffatomen, wobei das Reaktionsprodukt eine unumgesetzte acide Hydroxylgruppe der anorganischen Säure aufweist, und wobei die Lösung das Dotierungsmittel in einer Konzentration von etwa 1 bis etwa 20 Gew.-%, bezogen auf die gesamte Lösung, enthält; und
- das Lösungsmittel entfernt.

15. Verfahren nach Anspruch 13 oder 14, wobei das Basismaterial ein oder mehrere Polymere enthält.

16. Verfahren nach Anspruch 15, wobei das Basismaterial ein basisches Polymer oder ein Gemisch aus basischen Polymeren ist, ausgewählt aus der Gruppe, umfassend Polybenzimidazol, Polypyridin, Polypyrimidin, Polyimidazole, Polybenzthiazole, Polybenzoxazole, Polyoxadiazole, Polychinoxaline, Polythiadiazole, Poly(tetrazapyrene) oder eine Kombination von zwei oder mehreren davon.

17. Verfahren nach Anspruch 16, wobei das basische Polymer Polybenzimidazol ist.

18. Verfahren nach einem der Ansprüche 13 bis 17, wobei die mindestens zweibasige anorganische Säure Phosphorsäure ist.

19. Verfahren nach einem oder mehreren der Ansprüche 13 bis 18, wobei die organische Verbindung ein linearer oder verzweigter, substituierter oder unsubstituierter aliphatischer Alkohol mit 6 bis 16 Kohlenstoffatomen, insbesondere mit 7 bis 12 Kohlenstoffatomen, vorzugsweise 8 bis 10 Kohlenstoffatomen, ist.

20. Verfahren nach einem oder mehreren der Ansprüche 13 bis 19, wobei die organische Verbindung 2-Ethylhexanol ist.

21. Verfahren nach einem oder mehreren der Ansprüche 13 bis 20, wobei das Dotierungsmittel Di-(2-ethylhexyl)phosphorsäureester ist.

22. Verfahren nach einem oder mehreren der Ansprüche 13 bis 21, wobei das Lösungsmittel ausgewählt ist aus der Gruppe, umfassend N-Methylpyrrolidon, Dimethylformamid, Dimethylsulfoxid, Dimethylacetamid und beliebige Gemische davon.

23. Verfahren nach einem oder mehreren der Ansprüche 13 bis 22, wobei das Lösungsmittel Dimethylacetamid ist.

24. Verfahren nach einem oder mehreren der Ansprüche 13 bis 23, wobei die Lösung das Dotierungsmittel in einer Konzentration von etwa 3 bis etwa 15 Gew.-%, bezogen auf die gesamte Lösung, enthält.

25. Verfahren nach einem oder mehreren der Ansprüche 13 bis 24, wobei die Lösung das basische Polymer oder das Gemisch aus basischen Polymeren in einer Konzentration von etwa 10 bis etwa 50 Gew.-%, bezogen auf die gesamte Lösung, enthält.

26. Verfahren nach einem oder mehreren der Ansprüche 13 bis 25, wobei die Lösung mindestens ein Vernetzungsmittel, welches mindestens zwei funktionale Gruppen aufweist, in einer Konzentration von etwa 1 bis etwa 30 Gew.-%, bezogen auf das Gesamtgewicht aus Polymer und Vernetzer, enthält.

27. Verfahren nach Anspruch 26, wobei der Vernetzer mindestens zwei Epoxidgruppen im Molekül aufweist.

28. Verfahren nach einem der Ansprüche 26 oder 27, wobei der Vernetzer 1,4-Butandioldiglycidylether ist.

29. Verfahren nach einem oder mehreren der Ansprüche 13 bis 28, wobei das Dotierungsmittel höchstens zu etwa 3 Gew.-%, vorzugsweise höchstens zu etwa 2 Gew. -%, in Wasser löslich ist.

30. Verfahren nach einem oder mehreren der Ansprüche 13 bis 29, wobei die Lösung durch Maschinenziehen in die Form eines Films gebracht wird.

31. Verwendung mindestens einer protonenleitenden Elektrolytmembran in Form einer Membran-Elektroden-Einheit in einer Brennstoffzelle, wobei jede Membran-Elektroden-Einheit eine protonenleitende Elektrolytmembran gemäß einem der Ansprüche 1 bis 12 aufweist, die in Kontakt mit zwei Elektroden steht und zwischen den Elektroden so angeordnet ist, dass diese voneinander getrennt sind.

32. Verwendung nach Anspruch 31, wobei die Brennstoffzelle im Temperaturbereich zwischen etwa 20°C und etwa 200°C eingesetzt werden kann.

33. Verwendung nach Anspruch 32, wobei die Brennstoffzelle im Temperaturbereich zwischen etwa 50°C und etwa 200°C eingesetzt werden kann.

34. Verwendung nach Anspruch 33, wobei die Brennstoffzelle im Temperaturbereich zwischen etwa 140°C und etwa 180°C eingesetzt werden kann.

## Claims

1. Proton-conducting electrolyte membrane, comprising at least one base material and at least one dopant, the dopant being a reaction product of an at least dibasic inorganic acid, selected from the group encompassing phosphoric acid and sulphuric acid, with an organic compound selected from the group encompassing linear or branched, substituted or unsubstituted aliphatic alcohols having 5 to 20 carbon atoms and linear or branched, substituted or unsubstituted aliphatic amines having 5 to 20 carbon atoms, the reaction product having an unreacted acidic hydroxyl group of the inorganic acid, and the membrane comprising the dopant at a concentration of 10 to < 30 wt%, based on the total weight of the dried doped membrane.

2. Membrane according to Claim 1, the base material comprising one or more polymers and/or one or more ceramic materials.

3. Membrane according to Claim 1 or 2, the at least one base material being a basic polymer selected from the group encompassing polybenzimidazole, polypyridine, polypyrimidine, polyimidazoles, polybenzothiazoles, polybenzoxazoles, polyoxadiazoles, polyquinoxalines, polythiadiazoles, poly(tetrazapyrenes) or a combination of two or more thereof.

4. Membrane according to Claim 3, the basic polymer being polybenzimidazole.

5. Membrane according to any of Claims 1 to 4, the at least dibasic inorganic acid being phosphoric acid.

6. Membrane according to one or more of Claims 1 to 5, the organic compound for preparing the dopant being a linear or branched, substituted or unsubstituted aliphatic alcohol having 6 to 16 carbon atoms, more particularly having 7 to 12 carbon atoms, preferably 8 to 10 carbon atoms.

7. Membrane according to one or more of Claims 1 to 6, the organic compound being 2-ethylhexanol.

8. Membrane according to one or more of Claims 1 to 7, the dopant being di(2-ethylhexyl) phosphate.

9. Membrane according to one or more of Claims 1 to 8, the membrane comprising the dopant at a concentration of 10 to 20 wt%, based on the total weight of the dried doped membrane.

10. Membrane according to one or more of Claims 3 to 9, the basic polymer being crosslinked.

11. Membrane according to one or more of Claims 1 to 10, the dopant being soluble to an extent of at most about 3 wt%, preferably at most about 2 wt%, in water.

12. Membrane according to one or more of Claims 1 to 11, the electrolyte membrane having a thickness of 10 to 200 µm.

13. Method for producing a proton-conducting electrolyte membrane according to any of Claims 1 to 12, by
- dissolving a base material or a mixture of base materials and a dopant in a solvent, the dopant being a reaction product of an at least dibasic inorganic acid selected from the group encompassing phosphoric acid and sulphuric acid with an organic compound selected from the group encompassing linear or branched, substituted or unsubstituted aliphatic alcohols having 5 to 20 carbon atoms and linear or branched, substituted or unsubstituted aliphatic amines having 5 to 20 carbon atoms, the reaction product having an unreacted acidic hydroxyl group of the inorganic acid, and the solution comprising the dopant at a concentration of about 1 to about 20 wt%, based on the overall solution;
- bringing the resulting solution into the form of a film; and
- removing the solvent.

14. Method for producing a proton-conducting electrolyte membrane according to any of Claims 1 to 12, by
- impregnating a ceramic material as a base material, or a mixture of ceramic materials as base material, with a dopant in a solvent, the dopant being a reaction product of an at least dibasic inorganic acid selected from the group encompassing phosphoric acid and sulphuric acid with an organic compound selected from the group encompassing linear or branched, substituted or unsubstituted aliphatic alcohols having 5 to 20 carbon atoms and linear or branched, substituted or unsubstituted aliphatic amines having 5 to 20 carbon atoms, the reaction product having an unreacted acidic hydroxyl group of the inorganic acid, and the solution comprising the dopant at a concentration of about 1 to about 20 wt%, based on the overall solution; and
- removing the solvent.

15. Method according to Claim 13 or 14, the base material comprising one or more polymers.

16. Method according to Claim 15, the base material being a basic polymer or a mixture of basic polymers selected from the group encompassing polybenzimidazole, polypyridine, polypyrimidine, polyimidazoles, polybenzothiazoles, polybenzoxazoles, polyoxadiazoles, polyquinoxalines, polythiadiazoles, poly(tetrazapyrenes) or a combination of two or more thereof.

17. Method according to Claim 16, the basic polymer being polybenzimidazole.

18. Method according to any of Claims 13 to 17, the at least dibasic inorganic acid being phosphoric acid.

19. Method according to one or more of Claims 13 to 18, the organic compound being a linear or branched, substituted or unsubstituted aliphatic alcohol having 6 to 16 carbon atoms, more particularly having 7 to 12 carbon atoms, preferably 8 to 10 carbon atoms.

20. Method according to one or more of Claims 13 to 19, the organic compound being 2-ethylhexanol.

21. Method according to one or more of Claims 13 to 20, the dopant being di(2-ethylhexyl) phosphate.

22. Method according to one or more of Claims 13 to 21, the solvent being selected from the group encompassing N-methylpyrrolidone, dimethylformamide, dimethyl sulphoxide, dimethylacetamide and any desired mixtures thereof.

23. Method according to one or more of Claims 13 to 22, the solvent being dimethylacetamide.

24. Method according to one or more of Claims 13 to 23, the solution comprising the dopant at a concentration of about 3 to about 15 wt%, based on the overall solution.

25. Method according to one or more of Claims 13 to 24, the solution comprising the basic polymer or the mixture of basic polymers at a concentration of about 10 to about 50 wt%, based on the overall solution.

26. Method according to one or more of Claims 13 to 25, the solution comprising at least one crosslinking agent which has at least two functional groups, at a concentration of about 1 to about 30 wt%, based on the total weight of polymer and crosslinker.

27. Method according to Claim 26, the crosslinker having at least two epoxide groups in the molecule.

28. Method according to either of Claims 26 and 27, the crosslinker being 1,4-butanediol diglycidyl ether.

29. Method according to one or more of Claims 13 to 28, the dopant being soluble to an extent of at most about 3 wt%, preferably at most about 2 wt%, in water.

30. Method according to one or more of Claims 13 to 29, the solution being brought into the form of a film by machine drawing.

31. Use of at least one proton-conducting electrolyte membrane in the form of a membrane-electrode assembly in a fuel cell, each membrane-electrode assembly having a proton-conducting electrolyte membrane according to any of Claims 1 to 12, which is in contact with two electrodes and which is disposed between the electrodes in such a way that they are separate from one another.

32. Use according to Claim 31, the fuel cell being able to be used in the temperature range between about 20°C and about 200°C.

33. Use according to Claim 32, the fuel cell being able to be used in the temperature range between about 50°C and about 200°C.

34. Use according to Claim 33, the fuel cell being able to be used in the temperature range between about 140°C and about 180°C.

## Revendications

1. Membrane électrolytique conductrice de protons, comprenant au moins un matériau de base et au moins un dopant, le dopant étant un produit de réaction d'un acide inorganique au moins dibasique, choisi dans le groupe comprenant l'acide phosphorique et l'acide sulfurique, avec un composé organique, choisi dans le groupe comprenant des alcools aliphatiques linéaires ou ramifiés, substitués ou non substitués, ayant de 5 à 20 atomes de carbone, et des amines aliphatiques linéaires ou ramifiées, substituées ou non substituées, ayant de 5 à 20 atomes de carbone, le produit de réaction comportant un groupe hydroxy acide n'ayant pas réagi de l'acide inorganique, et la membrane contenant le dopant à une concentration de 10 à <30 % en poids, par rapport au poids total de la membrane dopée, séchée.

2. Membrane selon la revendication 1, dans laquelle le matériau de base contient un ou plusieurs polymères et/ou un ou plusieurs matériaux céramiques.

3. Membrane selon la revendication 1 ou 2, dans laquelle ledit au moins un matériau de base est un polymère basique, choisi dans le groupe comprenant le polybenzimidazole, la polypyridine, la polypyrimidine, les polyimidazoles, polybenzothiazoles, polybenzoxazoles, polyoxadiazoles, polyquinoxalines, polythiadiazoles, poly(tétrazapyrène)s ou une association de deux ou plus de deux de ceux-ci.

4. Membrane selon la revendication 3, dans laquelle le polymère basique est le polybenzimidazole.

5. Membrane selon l'une quelconque des revendications 1 à 4, dans laquelle ledit acide inorganique au moins dibasique est l'acide phosphorique.

6. Membrane selon une ou plusieurs des revendications 1 à 5, dans laquelle le composé organique pour la préparation du dopant est un alcool aliphatique linéaire ou ramifié, substitué ou non substitué, ayant de 6 à 16 atomes de carbone, en particulier ayant de 7 à 12 atomes de carbone, de préférence de 8 à 10 atomes de carbone.

7. Membrane selon une ou plusieurs des revendications 1 à 6, dans laquelle le composé organique est le 2-éthylhexanol.

8. Membrane selon une ou plusieurs des revendications 1 à 7, dans laquelle le dopant est le phosphate de di-(2-éthylhexyle).

9. Membrane selon une ou plusieurs des revendications 1 à 8, dans laquelle la membrane contient le dopant à une concentration de 10 à 20 % en poids, par rapport au poids total de la membrane dopée, séchée.

10. Membrane selon une ou plusieurs des revendications 3 à 9, dans laquelle le polymère basique est réticulé.

11. Membrane selon une ou plusieurs des revendications 1 à 10, dans laquelle le dopant est soluble dans l'eau au maximum à raison d'environ 3 % en poids, de préférence au maximum à raison d'environ 2 % en poids.

12. Membrane selon une ou plusieurs des revendications 1 à 11, la membrane électrolytique ayant une épaisseur de 10 à 200 µm.

13. Procédé pour la production d'une membrane électrolytique conductrice de protons selon l'une quelconque des revendications 1 à 12, dans lequel on
- dissout un matériau de base ou un mélange de matériaux de base et un dopant dans un solvant, le dopant étant un produit de réaction d'un acide inorganique au moins dibasique, choisi dans le groupe comprenant l'acide phosphorique et l'acide sulfurique, avec un composé organique, choisi dans le groupe comprenant des alcools aliphatiques linéaires ou ramifiés, substitués ou non substitués, ayant de 5 à 20 atomes de carbone, et des amines aliphatiques linéaires ou ramifiées, substituées ou non substituées, ayant de 5 à 20 atomes de carbone, le produit de réaction comportant un groupe hydroxy acide n'ayant pas réagi de l'acide inorganique, et la solution contenant le dopant à une concentration d'environ 1 à environ 20 % en poids, par rapport à la solution totale ;
- met sous forme d'un film la solution obtenue ; et
- élimine le solvant.

14. Procédé pour la production d'une membrane électrolytique conductrice de protons selon l'une quelconque des revendications 1 à 12, dans lequel on
- imprègne un matériau céramique en tant qu'un matériau de base ou un mélange de matériaux céramiques en tant que matériau de base avec un dopant dans un solvant, le dopant étant un produit de réaction d'un acide inorganique au moins dibasique, choisi dans le groupe comprenant l'acide phosphorique et l'acide sulfurique, avec un composé organique, choisi dans le groupe comprenant des alcools aliphatiques linéaires ou ramifiés, substitués ou non substitués, ayant de 5 à 20 atomes de carbone, et des amines aliphatiques linéaires ou ramifiées, substituées ou non substituées, ayant de 5 à 20 atomes de carbone, le produit de réaction comportant un groupe hydroxy acide n'ayant pas réagi de l'acide inorganique, et la solution contenant le dopant à une concentration d'environ 1 à environ 20 % en poids, par rapport à la solution totale ; et
- élimine le solvant.

15. Procédé selon la revendication 13 ou 14, dans lequel le matériau de base contient un ou plusieurs polymères.

16. Procédé selon la revendication 15, dans lequel le matériau de base est polymère basique ou un mélange de polymères basiques, choisis dans le groupe comprenant le polybenzimidazole, la polypyridine, la polypyrimidine, les polyimidazoles, polybenzothiazoles, polybenzoxazoles, polyoxadiazoles, polyquinoxalines, polythiadiazoles, poly(tétrazapyrène)s ou une association de deux ou plus de deux de ceux-ci.

17. Procédé selon la revendication 16, dans lequel le polymère basique est le polybenzimidazole.

18. Procédé selon l'une quelconque des revendications 13 à 17, dans lequel l'acide inorganique au moins dibasique est l'acide phosphorique.

19. Procédé selon une ou plusieurs des revendications 13 à 18, dans lequel le composé organique est un alcool aliphatique linéaire ou ramifié, substitué ou non substitué, ayant de 6 à 16 atomes de carbone, en particulier ayant de 7 à 12 atomes de carbone, de préférence de 8 à 10 atomes de carbone.

20. Procédé selon une ou plusieurs des revendications 13 à 19, dans lequel le composé organique est le 2-éthylhexanol.

21. Procédé selon une ou plusieurs des revendications 13 à 20, dans lequel le dopant est le phosphate de di-(2-éthylhexyle).

22. Procédé selon une ou plusieurs des revendications 13 à 21, dans lequel le solvant est choisi dans le groupe comprenant la N-méthyl-pyrrolidone, le diméthylformamide, le diméthyl-sulfoxyde, le diméthylacétamide et des mélanges quelconques de ceux-ci.

23. Procédé selon une ou plusieurs des revendications 13 à 22, dans lequel le solvant est le diméthylacétamide.

24. Procédé selon une ou plusieurs des revendications 13 à 23, dans lequel la solution contient le dopant à une concentration d'environ 3 à environ 15 % en poids, par rapport à la solution totale.

25. Procédé selon une ou plusieurs des revendications 13 à 24, dans lequel la solution contient le polymère basique ou le mélange de polymères basiques à une concentration d'environ 10 à environ 50 % en poids, par rapport à la solution totale.

26. Procédé selon une ou plusieurs des revendications 13 à 25, dans lequel la solution contient au moins un agent de réticulation qui comporte au moins deux groupes fonctionnels, à une concentration d'environ 1 à environ 30 % en poids, par rapport au poids total du polymère et de l'agent de réticulation.

27. Procédé selon la revendication 26, dans lequel l'agent de réticulation comporte au moins deux groupes époxy dans la molécule.

28. Procédé selon l'une quelconque des revendications 26 et 27, dans lequel l'agent de réticulation est l'éther diglycidylique de 1,4-butanediol.

29. Procédé selon une ou plusieurs des revendications 13 à 28, dans lequel le dopant est soluble dans l'eau au maximum à raison d'environ 3 % en poids, de préférence au maximum à raison d'environ 2 % en poids.

30. Procédé selon une ou plusieurs des revendications 13 à 29, dans lequel la solution est mise sous la forme d'un film par tirage mécanique.

31. Utilisation d'au moins une membrane électrolytique conductrice de protons, sous forme d'une unité membrane-électrodes dans une pile à combustible, chaque unité membrane-électrodes comportant une membrane électrolytique conductrice de protons selon l'une quelconque des revendications 1 à 12, qui est en contact avec deux électrodes et est disposée entre les électrodes, de sorte que celles-ci sont séparées l'une de l'autre.

32. Utilisation selon la revendication 31, dans laquelle la pile à combustible peut être utilisée dans la plage de température comprise entre environ 20 °C et environ 200 °C.

33. Utilisation selon la revendication 32, dans laquelle la pile à combustible peut être utilisée dans la plage de température comprise entre environ 50 °C et environ 200 °C.

34. Utilisation selon la revendication 33, dans laquelle la pile à combustible peut être utilisée dans la plage de température comprise entre environ 140 °C et environ 180 °C.
